# EUROPEAN PATENT APPLICATION

(11) **EP 4 246 390 A1**
(43) Date of publication of application: **20.09.2023**
(21) Application number: 22162698.9
(22) Date of filing: 17.03.2022
(51) Int. Cl.: G06Q 10/02, G06Q 30/02, G06Q 30/06, H04L 65/60

(54) **A CLOUD BASED EVENT MANAGEMENT PLATFORM AND A METHOD THEREOF**

(71) Applicant: Combo Entertainment GmbH, 01744 Dippoldiswalde (DE)
(72) Inventor: Böhm, Antje, 01744 Dippoldiswalde (DE); Böhm, Bernd, 01744 Dippoldiswalde (DE)
(74) Representative: Meyer-Dulheuer MD Legal Patentanwälte PartG mbB

(57) **Abstract**

The present invention provides an event setup module **(01)** for creating one or more event(s), a marketing management module **(02)** for tagging a set of marketing data with the event(s), a core event management module **(06)** for managing the event(s) and generating a plurality of tickets for the event(s), a streaming management module **(03)** for allowing the user(s) of the platform **(100)** to stream the events in any mode, a ticket sales management module **(04)** for selling the ticket(s) to a customer(s), an advanced booking management module **(05)** for providing the user(s) an advanced ticket booking service through a private network or an integrated existing network; and a smart customer management module **(07)** for dealing with customer communication and reversing/modifying the events, wherein a reimbursement process is executed by the smart customer management module **(07)** for transferring money back to the customer(s) and cancellation of the invoice(s) without any hassle

## Description

### TECHNICAL FIELD

This present invention pertains generally to the field of event management and more particularly to a cloud-based event management platform and a method thereof that offers fully comprehensive cloud-based solution for event management. The present invention accompanies the organizer from planning to marketing, ticket sales, technical realization of online events, admission control to evaluation and billing, as well as back office and accounting and works for both offline mode and hybrid mode of event organization service and provides a seamless way to cancel or modify the event.

### BACKGROUND OF THE INVENTION

The implementation of project management and growth of small and/or large-scale personal or business events including concerts, seminars, celebrations, marriages, official parties, musicals, or conventions is referred to as event management. Before starting the event, it is important to investigate the brand, analyze its target audience, develop the event idea, and organize the technical components.

The events sector today encompasses all sorts of events, from the Olympics to professional breakfast meetings. Many companies, celebrities, charity organizations, and interest groups arrange events to promote their brand, create commercial contacts, raise funds, or commemorate the accomplishment. Fundraising, scheduling, venue selection, collecting essential permissions, coordinating transportation and parking, organizing for speakers or performers, preparing decor, event security, catering, dealing with third-party suppliers, and emergency preparations are all part of the event organizational planning. Because each event is unique and the process of organizing and executing each event varies widely on the type of event.

Organizing event is a fragmented process that requires weeks of preparation both online and in-person, as well as the expenditure of time and effort in combination with different components of data to make it relevant, as well as phoning, negotiating, and coordinating with several entities. As a result, many people engage event planners or event managers to organize and/or manage their social or professional events, such as weddings, professional conferences, family events, and organizational gatherings. Although an event planner can alleviate some of the burdens, a host's engaging an event planner is expensive and may result in unexpected expenses that exceed the budget allotted for the event. Furthermore, event planners often deal with a limited number of suppliers, so the event host does not have access to the full range of options (for instance, catering, food, decorating, and music) for the event.

The event organizer is the person in charge of event planning and execution, as well as the artistic, technical, and logistical aspects. Entire event design, brand development, advertising and communication strategy, audio-visual production, screenplay writing, logistics, financing, negotiation, and client support are all part of this. For understanding event management as a whole thing primarily includes the knowledge types of events, however, it is important to understand what objectives or points one should keep in mind while managing the event and those objectives are making timelines, selecting avenues, sourcing, and managing supplies, marketing and communication and thinking sustainably. Customer relationship management (CRM), meeting scheduling, lead management, satisfaction surveys, and other functions are managed by current event management software.

Generally, the events are managed by the organizers personally, but with the development in wireless technology, this management of events has shifted to online mode. There are various platforms and systems available for organizing and managing the vent online.

The existing platform involves the registration of both user and event organizer and further permits the event organizer to create an event by adding some details related to the event and the user is permitted to see the events and book a ticket to the desired event. The platforms are either based on the local server or online servers with a lack of data security. Moreover, some of the users face the issue of the site crashing while ticket booking of the event. Hence these issues decrease the efficiency of the current event management systems.

Examples of some event management applications and platforms are disclosed in U.S. patent application no. US20010056507A1 that provides teaching on a system for the planning, management and execution of events that permits the event manager, client, convention personnel, and suppliers to coordinate activities and rapidly disseminate information. Preferably, the system includes a repository of information. All or portions of the information may be electronically accessed by the various parties, subject to the limitations imposed by the event manager. Real time information is provided to the parties, including the ability to observe the progress of the production of the exhibit in real time from remote locations.

Another U.S. patent application no. US8230445B2 describes about a method and system in an event management system. The method includes the step of creating an agent on a server in an event management system for monitoring an event. The event is present when a data achieving a predefined status defined by a business rule. The event management system includes a data source for generating the notification. The method further includes the steps of running the agent according to a schedule, generating the notification upon occurring of the event.

Another U.S. patent application no. US2011/0015961 describes a "meetings, events, reservation" (MER) system in which users of the system are stored on a database. The users or invitees are contacted to determine their interest in a particular event, details of the event being stored in an event database and broadcast to the invitees for their response. The system describes finding the best accommodation for invitees to a particular event at a given date, time, and location in accordance with price preferences. Options are provided from which each invitee can indicate his/her preferences. A software module is provided on each mobile device to enable each user, via his/her mobile device and a web management application program, to access the MER system. Here, the MER is fixed and the only interaction with the system is by an invitee indicating his/her participation at the event.

A European patent application no. EP2743869A1 discloses about an event management system which is implemented on a hosted platform. The hosted platform comprises a front end portal including at least one user interface; an administrative portal through which third parties access the hosted platform, at least a search engine interfacing with said front end portal for carrying out searches in accordance with parameters input by a user through the front end portal, a plurality of modules each comprising an application associated with event management; and a back end interfacing with said search engine and each module by way of a connection hub to provide application integration.

However, the systems and platforms available for event management are generally based on offline mode in which the organizer promotes the event and sells the tickets online, and in case the event is canceled the customers do not receive the money back. During the pandemic time, when most of the events were happening online, these conventional systems failed to work efficiently, though there are several event management systems or platforms for online or live events, they only provide the facility of event promotion and selling of tickets. Hence, there is a need for an efficient event management system by which the user organizer can do all the things needed in the event and that works for both online, offline, and hybrid mode events.

In light of the aforementioned challenges, there is a need for an integrated cloud-based event management platform a method thereof that enables customers to plan their events in all kinds of modes and helps the event organizer from planning to marketing, ticket sales, technical realization of online events, admission control to evaluation, billing and to cancel events in a hassle- free manner.

### SUMMARY OF THE INVENTION

It is therefore an object of the present invention to provide a cloud-based event management platform a method thereof by the which the user may organize all types of events including offline, live hybrid.

It is another object of the present invention to provide a cloud-based event management platform a method thereof with a facility to cancel an event by the push of a button which involves automated reversal of entrance fees in case of cancellation of an event.

It is yet another object of the present invention to provide a cloud-based event management platform a method thereof with a facility to personalize tickets and to use personal templates for ticket printing.

Some embodiments relate to a cloud-based event management platform a method thereof in which all variants of the event (live, hybrid, online) are freely selectable in one platform and also changeable during the pre-sale, further this platform provides facility to cancel an event by the push of a button which involves automated reversal of entrance fees in case of cancellation of an event and to personalize tickets and to use personal templates for ticket printing.

Some embodiments relate to a cloud-based event management platform a method thereof that is a fully comprehensive cloud application for event management, which accompanies the organizer from planning to marketing, ticket sales, technical realization of online events, admission control to evaluation and billing, as well as back office and accounting.

Some embodiments relate to a cloud based event management platform comprising, an event setup module configured within the platform for creating one or more event(s) and configuring the event(s) by requesting a set of details from a user, a marketing management module linked with the event setup module for tagging a set of marketing data with the event(s) configured on the event setup module, a core event management module for managing the event(s) and generating a plurality of tickets for the event(s) according to the requirement of the user seamlessly, a streaming management module for allowing the user(s) of the platform to stream the events in any mode.

Some embodiments relate to a cloud based event management platform comprising a ticket sales management module for selling said ticket(s) to a customer(s) and receiving payment(s) related to said selling of tickets via a payment gateways configured in said platform and sending an invoice related to said payment(s) to said customer(s), an advanced booking management module for providing said user(s) an advanced ticket booking service through a private network or an integrated existing network for enabling a seamless integration of a wide range of distribution channels and a smart customer management module for dealing with customer communication and reversing/modifying said events according to an instruction provided by said user(s) and in case of cancel/modification of said event(s), wherein a reimbursement process is executed by said smart customer management module for transferring money back to said customer(s) and cancellation of said invoice(s) without any hassle.

Some embodiments relate to a cloud-based event management platform with an event setup module wherein every event organizer can be register. In the personal organizer area, the user i.e., event organizer is permitted to create new events, configure them accordingly and provide them with descriptions and marketing material such as location, time, description, pictures, number of seats, prices, ticket layout etc.

Some embodiments relate to a cloud-based event management platform with marketing management module in which marketing materials are provided to event organizers, such as social media interfaces, QR codes, landing page, etc.

Some embodiments relate to a cloud-based event management platform with streaming management module in which for live, online and hybrid events, the user or customer uses the streaming settings in the event area by which the user gets connected to his live stream himself or uses the corresponding service of the platform. Access to the live stream is provided via the ticket mail to the user (ticket purchaser). Access to the online event is activated via a countdown at the start of the event in the cloud-based event management platform.

Some embodiments relate to a cloud-based event management platform with ticket sales management module in which the events are then clearly presented and can be sold to the user (ticket buyer), by accepting electronic payment methods and the tickets are available for printing or for the smartphone within seconds. Furthermore, the invoicing is fully automated as a pdf document or in another suitable format.

Some embodiments relate to a cloud-based event management platform with advanced booking management module in which the user is permitted to set up their network of advance booking offices or integrate existing advance booking offices into the process. This enables seamless integration of a wide range of distribution channels. The present invention provides a cross-platform cloud architecture that means that a wide variety of hardware systems can be used here.

Some embodiments relate to a cloud-based event management platform with core event management module for the management of the event, the ticket generator for the box office as well as tools for admission control and contact tracks are available to the user. Each event organizer can create and configure any number of entry points. Almost any hardware that is already available to the user can be used. From laser scanners to smartphones or even completely analog and offline.

Some embodiments relate to a cloud-based event management platform with smart customer management module in which events are postponed or canceled, organizers at their disposal for customer communication. At the push of a button, visitors can be informed, or even entire events can be canceled and reversed. The information of the customer including reimbursement of the money transfer and preparation of the cancellation invoice is fully automated as part of the cancellation process. The accounting is also carried out automatically accordingly.

Some embodiments relate to a cloud based event management method which comprises the steps of permitting a user to creating one or more event(s) and configure the event(s) by providing a set of details, tagging a set of marketing data with the event(s) configured in step(a), requesting the user to generate a plurality of tickets for the event(s) according to requirement of the user(s) seamlessly, wherein the user(s) is permitted to customized the ticket(s) according to requirements, allowing the user(s) or customer(s) to stream the event(s) in any mode, permitting the user(s) to sell one or more ticket(s) to the customer(s) and receive payment(s) related to the ticket(s) on a payment gateway, sending an invoice related to the payment(s) to the customer, providing the user(s) an advanced ticket booking service through a private network or an integrated existing network for enabling a seamless integration of a wide range of distribution channels and dealing with the customer(s) and reversing/modifying the event(s) according to an instruction provided by the user(s) an in case of cancel/modification of event and exacting a reimbursement process for transferring the payment back to the customer(s) and cancellation of the invoice(s) without any hassle.

Further detail regarding the cloud based event management platform in accordance with the present invention may be had with reference to the detailed description which is provided below, taken in conjunction with the following illustrations.

### BRIEF DESCRIPTION OF THE DRAWINGS

**Figure** 1 is a block diagram of the cloud-based event management platform according to an embodiment of the present invention.
**Figure** 2 is a flow chart of working of the cloud-based event management platform according to an embodiment of the present invention.
**Figure** 3 is a pictorial depiction of cloud-based event management method according to an embodiment of the present invention.

### DETAILED DESCRIPTION OF THE INVENTION

The present invention will be described with respect to particular embodiments and with reference to certain drawings, but the invention is not limited thereto. The drawings described are only schematic and are non-limiting. In the drawings, the size of some of the elements may be exaggerated and not drawn on scale for illustrative purposes.

The present invention provides a cloud-based event management platform in which all variants of the event (live, hybrid, online) are freely selectable in one platform and also changeable during the pre-sale, further this platform provide facility to cancel an event by the push of a button which involves automated reversal of entrance fees in case of cancellation of an event and to personalize tickets and to use personal templates for ticket printing.

According to an preferred embodiment of the present invention, the present invention provides a cloud based event management platform comprising, an event setup module configured within the platform for creating one or more event(s) and configuring the event(s) by requesting a set of details from a user, a marketing management module linked with the event setup module for tagging a set of marketing data with the event(s) configured on the event setup module, a core event management module for managing the event(s) and generating a plurality of tickets for the event(s) according to the requirement of the user seamlessly, a streaming management module for allowing the user(s) of the platform to stream the events in any mode, a ticket sales management module for selling the ticket(s) to a customer(s) and receiving payment(s) related to the selling of tickets via a payment gateways configured in the platform and sending an invoice related to the payment(s) to the customer(s), an advanced booking management module for providing the user(s) an advanced ticket booking service through a private network or an integrated existing network for enabling a seamless integration of a wide range of distribution channels and a smart customer management module for dealing with customer communication and reversing/modifying the events according to an instruction provided by the user(s) and in case of cancel/modification of the event(s), wherein a reimbursement process is executed by the smart customer management module for transferring money back to the customer(s) and cancellation of the invoice(s) without any hassle.

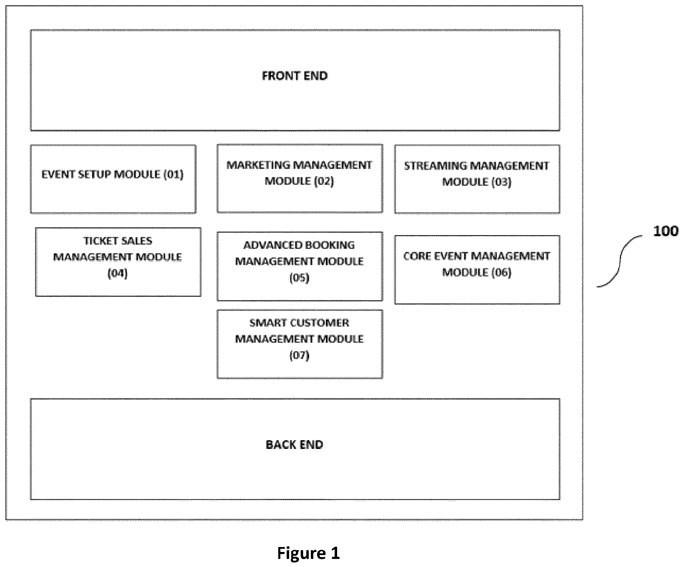

Referring now to **Figure 1****,** a block diagram of the cloud-based event management platform is depicted. The cloud based event management platform **(100)** comprises of an event setup module **(01)** that is configured within said platform **(100)** for creating one or more events and configure said events by providing a set of details which are requested from a user, a marketing management module **(02)** linked with said event setup module **(01)** for tagging a set of marketing data with said events configured on said event setup module **(01),** a streaming management module **(03)** is for allowing users of said platform **(100)** to stream said events in any mode i.e. live, online and hybrid mode by providing a ticket mail to a customer, a ticket sales management module **(04)** for selling one or more tickets to said customer and receiving payments related to said selling of tickets on one or more online payment gateways configured in said platform **(100)** and sending an invoice related to said payments to said customer.

Further in the **Figure 1****,** an advanced booking management module **(05)** is depicted which is for providing said user an advanced ticket booking service through a private network or an integrated existing network for enabling a seamless integration of a wide range of distribution channels, a core event management module **(06)** for management of said events and generating plurality of tickets for said events according to requirement of said user seamlessly and a smart customer management module **(07)** for dealing customer communication and reversing/modifying said events according to an instruction provided by said user and in case of cancel of event a reimbursement process is executed by said smart customer management module **(07)** for transfer money back to said customer(s) and cancellation of said invoice(s) without any hassle.

The cloud-based event management platform **(100)** is a fully comprehensive cloud application for event management, which accompanies the organizer from planning to marketing, ticket sales, technical realization of online events, admission control to evaluation and billing, as well as back office and accounting.

The present invention further provides the cloud-based event management platform **(100)** with an event setup module **(01)** wherein every event organizer can be register. In the personal organizer area, the user is permitted to create new events, configure them accordingly and provide them with descriptions and marketing material such as location, time, description, pictures, number of seats, prices, ticket layout etc.

The marketing management module **(02)** is for providing marketing materials to event organizers, such as social media interfaces, QR codes, landing page, etc. The streaming management module **(03)** is for online and hybrid events; the user uses the streaming settings in the event area by which the user gets connected to his live stream himself or uses the corresponding service of the platform **(100).** Access to the live stream is provided via the ticket mail to the user (ticket purchaser). Access to the online event is activated via a countdown at the start of the event in the cloud-based event management platform **(100).**

The ticket sales management module **(04)** is for clearly presenting the event and selling to the user (ticket buyer), by accepting electronic payment methods and the tickets are available for printing or for the smartphone within seconds. Furthermore, the invoicing is fully automated as a pdf document or in another suitable format.

Further the present invention comprises of an advanced booking management module **(05)** in which the user is permitted to set up their own network of advance booking offices or integrate existing advance booking offices into the process. This enables seamless integration of a wide range of distribution channels. The present invention provides a cross-platform **(100)** cloud architecture that means that a wide variety of hardware systems can be used here.

The core event management module **(06)** for the management of the event, the ticket generator for the box office as well as tools for admission control and contact tracking are available to the user. Each event organizer can create and configure any number of entry points. Almost any hardware that is already available to the user can be used. From laser scanners to smartphones or even completely analog and offline.

The smart customer management module **(07)** in which events are postponed or canceled, organizers at their disposal for customer communication. At the push of a button, visitors can be informed, or even entire events can be canceled and reversed. The information of the customer including reimbursement of the money transfer and preparation of the cancellation invoice is fully automated as part of the cancellation process. The accounting is also carried out automatically accordingly.

For operating the cloud-based event management platform (100) in accordance with an embodiment, the present invention comprises of one or more user systems, third party module which is connected through a network. The network used herein includes but not limited to public or private network for permitting the exchange of data between the modules and network in the present invention.

The user may access the event management platform **(100)** through a desktop computer, laptop computer, tablet computer, smart phone, or any other computing device. The cloud-based event management platform **(100)** also includes a database for storing all the data exchanged between the modules and platform **(100)** in a cloud server.

The cloud server is a robust physical or virtual infrastructure that stores applications and information which are formed by dividing a physical server into numerous virtual servers employing virtualization software. The present invention provides a platform **(100)** that process workloads and store data using an infrastructure-as-a-service (IaaS) paradigm, from which the users and admins of the present invention have remote access to virtual server functionalities through an internet interface.

Some of the primary features of cloud server in the present invention are, according to the requirement, the computing infrastructure of the cloud server might be physical, virtual, or a combination of both. The cloud server has all the features of an on-premises server and further allows customers to process intense workloads and store massive amounts of data automated services that are available on-demand through an API. This allows the admin of the present invention to pay monthly or on a per-user basis and the admin may choose a shared hosting package that adjusts based on needs.

The cloud server used in the present invention is cost-effective because there is a reduction in cost which is consumed during maintenance of hardware servers. The cloud server provides scalability as the present invention can be scaled to computing and storage resources for meeting the dynamic requirements, which also helps in fluctuating needs. The cloud server also provides high integration feature, as the cloud server is networks for ensuring uninterrupted communication and quick deployment. Hence the cloud server acts as a single pane which enables the complete control.

The present invention may further include some additional modules for providing a complete solution of event management such as expense monitoring module, expense reporting module, a customer management module, a user monitoring module, an authentication module, an administration module, optimizer module, event location data management module.

Each module in the present invention is a full-fledged piece of the logic module which capable of accessing a storage system, managing data flow, and displaying a full-screen user interface while adhering to the limits provided by the admin of the platform **(100).**

In the present invention, the modules relate to each other and to said platform **(100)** through a cloud server and a local server. The set of details including but not limited to location, time, description, pictures, number of seats, prices, and ticket layout. The marketing data includes but not limited to social media interfaces, QR codes, landing page. The user refers to event organizer and customer refers to ticket buyer. The user is permitted to customize said ticket according to requirements through said core event management module **(06).** To carry out accounting and evaluation of payment in said platform **(100)** an account management module is used for generating an accounting record and transferring said record to an account department.

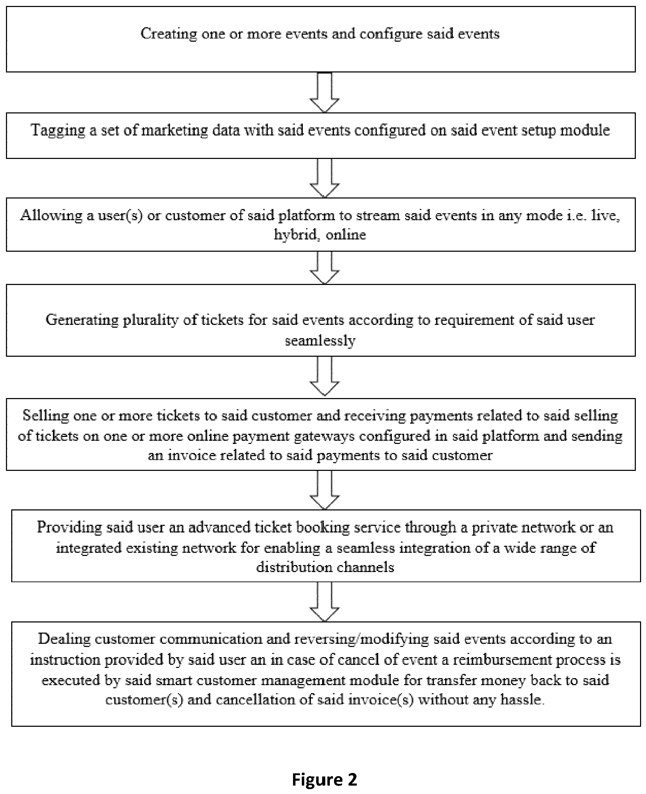

Now referring to Figure 2, a flow chart of working of present invention in depicted which an example in which a user needs to organize a musical event, now using the present invention the user needs to complete a preliminary registration process by providing credentials in the platform **(100).** The credentials include but not limited to name, address, phone number, age, and gender. The credentials are stored in the cloud server for ensuring high security of data.

The event management platform **(100)** makes a temporary profile of the user based on the credentials provided by the user. By logging in the profile, the user may organize and manage the event. In this case, the user first uses the event setup module **(01)** which is configured within the platform **(100)** for creating one or more events and configure the events by providing a set of details according to the requirements. The details in this case are related to the music event.

Upon successful event creation the user moves towards the marketing management module **(02)** that is linked with said event setup module **(01)** for tagging a set of marketing data with said events configured on said event setup module **(01).** The marketing management module **(02)** helps in promotion of the event by tagging the marketing data with the event created.

Upon successful marketing of the event the user proceeds towards the streaming management module **(03)** which permits the users of said platform **(100)** to stream said events in both an online mode or hybrid mode or live mode by providing a ticket mail to a customer. The user books the event to be in a live stream. Here he can connect his live stream himself or use the corresponding service of the platform **(100).** Access to the live stream is provided via the ticket mail to the user (ticket purchaser) along with the access to the online event is activated via a countdown at the start of the event.

Upon completion of streaming management of the event the user proceeds towards the ticket sales management module **(04)** which is for selling one or more tickets to said customer and receiving payments related to said selling of tickets on one or more online payment gateways configured in said platform **(100)** and sending an invoice related to said payments to said user. The musical event created by the user is clearly presented in the platform **(100)** and can be sold to the user (ticket buyer). By accepting electronic payment methods tickets are available for printing or for the smartphone within seconds in which the invoicing is fully automated.

Upon successful ticket sales of the musical event, the user proceeds towards the advanced booking management module **(05)** which is for providing said user an advanced ticket booking service through a private network or an integrated existing network for enabling a seamless integration of a wide range of distribution channels, further in which the user is permitted to set up their own network of advance booking offices or integrate existing advance booking offices into the process. This enables seamless integration of a wide range of distribution channels. The present invention provides a cross-platform **(100)** cloud architecture that means that a wide variety of hardware systems can be used here.

After completion of integration with network, the user moves towards the core event management module **(06)** for management of said events and generating plurality of tickets for said events according to requirement of said user seamlessly and for the management of the event, the ticket generator for the box office as well as tools for admission control and contact tracking are available to the user. Each event organizer can create and configure any number of entry points. Almost any hardware that is already available to the user can be used. From laser scanners to smartphones or even completely analog and offline.

For another instance, after the creation of the event, in case the user wishes to cancel or modify the event, the user is permitted to do so with the help of the smart customer management module **(07)** which is for dealing with customer communication and reversing/modifying said events according to an instruction provided by said user and in case of cancel of event a reimbursement process is executed by said smart customer management module **(07)** for transfer money back to said customer(s) and cancellation of said invoice(s) without any hassle.

As compared to the existing systems and platform **(100)** for event management that offer the creation of events, ticket sales, scanning at the entrance, etc., on the one hand, and the creation of an online event with the associated assignment of a link and its sale on the other, the present invention focuses on the development of a platform **(100)** in which the user has the facility to switch a "live event" to a "hybrid event" or "online-only" event at any time, even during an already running pre-sale. This is necessary, in case the general conditions change for the organizer. Furthermore, the possibility to cancel an event by integrated, automated reversal of payments is an important element.

The present invention provides features like all variants of the event (live, hybrid, online) freely selectable in one application/platform **(100)** and also changeable during the pre-sale. The service for the event to cancel an event by the push of a button, automated reversal of entrance fees in case of cancellation of an event. The service to personalize tickets and to use own templates for ticket printing.

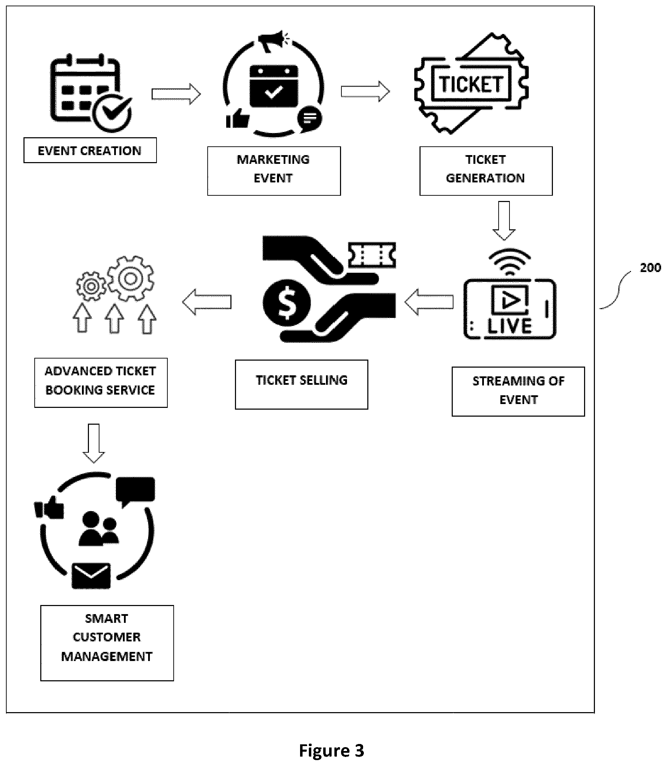

Now referring to **Figure 3****,** a pictorial depiction of cloud-based event management method according to an embodiment of the present invention. The cloud based event management method **(200)** comprises the steps of permitting a user to creating one or more event(s) and configure the event(s) by providing a set of details, tagging a set of marketing data with the event(s) configured in step(a), requesting the user to generate a plurality of tickets for the event(s) according to requirement of the user(s) seamlessly, wherein the user(s) is permitted to customized the ticket(s) according to requirements, allowing the user(s) or customer(s) to stream the event(s) in any mode, permitting the user(s) to sell one or more ticket(s) to the customer(s) and receive payment(s) related to the ticket(s) on a payment gateway, sending an invoice related to the payment(s) to the customer, providing the user(s) an advanced ticket booking service through a private network or an integrated existing network for enabling a seamless integration of a wide range of distribution channels and dealing with the customer(s) and reversing/modifying the event(s) according to an instruction provided by the user(s) an in case of cancel/modification of event and exacting a reimbursement process for transferring the payment back to the customer(s) and cancellation of the invoice(s) without any hassle.

Hence, the present invention provides a fully comprehensive cloud application-based platform **(100)** for event management, which accompanies the organizer from planning to marketing, ticket sales, the technical realization of online events, admission control to evaluation and billing, as well as back office and accounting.

As an improvement in the present invention, additional modules may be added, such as the event monitoring module which checks whether the event created by the user is legal or not. The admin provides some pre-set conditions and instructions in the event monitoring module to make it an automated process and in case there is an abnormality observed in the event then the admin is informed and further, the platform **(100)** terminates that particular user to organize such illegal or harmful or immoral events.

As another improvement in the present invention, data security may be enhanced for avoiding any kind of data leakage for example data encryption and decryption techniques may be used during the transfer of data. Encryption is the process of encoding data in cryptography. This procedure converts plaintext, or the original representation of the data, into cipher text, or a substitute representation of the data. Only authorized parties should be able to decipher a cipher - text back to plaintext and retrieve the original data.

As another improvement in the present invention, feedback or customer care module may be added in the present invention, in case the customer or user needs some external help in using the platform **(100).** The user or customer may provide inputs regarding any type of improvement in the platform **(100)** or any type of feedback through this module.

The present invention is easy to use, simplifies the logistics, and enables the event organizers to run impactful events and the user of the platform **(100)** can manage multiple events in a single platform through a single intuitive and dynamic interface.

As another improvement, in the present invention, some artificial intelligence techniques may be applied for automating certain operations and to understand the needs of the customer, user, and admin to make this platform **(100)** seamless, user friendly, and automatic.

Therefore, the present invention provides a cloud based event management platform that supports all variants of the events in a single platform and helps in automating the process in case of event cancellation, and permits the user to personalize the tick and use a customize template for developing the ticket online. The present invention provides a fully comprehensive cloud platform for event management, which accompanies the organizer from planning to marketing, ticket sales, the technical realization of online events, admission control to evaluation and billing, as well as back-office and accounting.

Additionally, the present invention helps in creating a virtual or hybrid experience for any event and allows the customers i.e. the event attenders to stream the event live or on-demand from anywhere. The present invention also reduces cost and increases efficiency by leveraging the power of one integrated platform to manage virtual, hybrid and in-person events from start to finish. Further, the present invention helps to expand the events to a wider audience while delivering a consistent brand experience across virtual, hybrid and in-person events.

Furthermore, the present invention also delivers a tailored agenda and composite multi-track events with ease with the ability to run more than one concurrent session in the same event and transforms the discussions into actionable understandings that permits the user or the event organizers to produce more sales and transform the events into real revenue drivers.

Through the present invention the user is also able to collect real-time insights into virtual event performance which include but not limited to session data, customer behavioural data, and much more. The users and customers of the present invention get an experience of the high level of security and privacy which is essential in delivering virtual involvements with built-in security expertise that assist in discovering and blocking threats.

It will therefore be understood that various changes in the details, materials and arrangement of parts which have been herein described and illustrated in order to explain the nature of the invention may be made by those skilled in the art within the principal and Scope of the invention as expressed in the following claims.

## Claims

1. A cloud based event management platform **(100)** comprising:
an event setup module **(01)** configured within said platform **(100)** for creating one or more event(s) and configuring said event(s) by requesting a set of details from a user;
a marketing management module **(02)** linked with said event setup module **(01)** for tagging a set of marketing data with said event(s) configured on said event setup module **(01);**
a core event management module **(06)** for managing said event(s) and generating a plurality of tickets for said event(s) according to the requirement of said user seamlessly;
a streaming management module **(03)** for allowing said user(s) of said platform **(100)** to stream said events in any mode;
a ticket sales management module **(04)** for selling said ticket(s) to a customer(s) and receiving payment(s) related to said selling of tickets via a payment gateways configured in said platform **(100)** and sending an invoice related to said payment(s) to said customer(s);
an advanced booking management module **(05)** for providing said user(s) an advanced ticket booking service through a private network or an integrated existing network for enabling a seamless integration of a wide range of distribution channels; and
a smart customer management module **(07)** for dealing with customer communication and reversing/modifying said events according to an instruction provided by said user(s) and in case of cancel/modification of said event(s), wherein a reimbursement process is executed by said smart customer management module **(07)** for transferring money back to said customer(s) and cancellation of said invoice(s) without any hassle.

2. The cloud based event management platform **(100)** according to claim 1, wherein said modules are connected with each other and to said platform **(100)** through a cloud server and a local server.

3. The cloud based event management platform **(100)** according to claim 1, wherein said set of details include but not limited to location, time, description, pictures, number of seats, prices and ticket layout.

4. The cloud based event management platform **(100)** according to claim 1, wherein said marketing data includes but not limited to social media interfaces, QR codes, landing page.

5. The cloud based event management platform **(100)** according to claim 1, wherein said user refers to event organizer and customer refers to ticket buyer.

6. The cloud based event management platform **(100)** according to claim 1, wherein said mode include but not limited to online, live and hybrid mode.

7. The cloud based event management platform **(100)** according to claim 1, wherein to carry out accounting and evaluation of said payment(s) in said platform **(100)** an account management module is used for generating an accounting record and transferring said record to an account department.

8. The cloud based event management platform **(100)** according to claim 1, wherein said platform **(100)** is configured with a cloud server for storage of data exchanged among the modules.

9. The cloud based event management platform **(100)** according to claim 1, wherein said platform **(100)** is accessed by at least three entities i.e. customers, user (event organizer), admins.

10. The cloud based event management platform **(100)** according to claim 1, wherein said distribution channels include but not limited to social media channels, television channels.

11. The cloud based event management platform **(100)** according to claim 1, wherein said payment gateways includes but not limited to online gateways like wallets, online gateways, credit, debit cards.

12. The cloud based event management platform **(100)** according to claim 1, wherein said cloud based event management platform **(100)** includes a host module that comprise of a front end interface, a search engine, an optimizer tool and a backend interface.

13. The cloud based event management platform **(100)** according to claim 1, wherein said smart customer management module **(07)** works on a set of pre-set instructions for automating the operations conducted by said smart customer management module **(07).**

14. A cloud based event management method **(200)** comprising steps of:
a) permitting a user to creating one or more event(s) and configure said event(s) by providing a set of details;
b) tagging a set of marketing data with said event(s) configured in step(a);
c) requesting said user to generate a plurality of tickets for said event(s) according to requirement of said user(s) seamlessly, wherein said user(s) is permitted to customized said ticket(s) according to requirements;
d) allowing said user(s) or customer(s) to stream said event(s) in any mode;
e) permitting said user(s) to sell one or more ticket(s) to said customer(s) and receive payment(s) related to said ticket(s) on a payment gateway;
f) sending an invoice related to said payment(s) to said customer;
g) providing said user(s) an advanced ticket booking service through a private network or an integrated existing network for enabling a seamless integration of a wide range of distribution channels; and
h) dealing with said customer(s) and reversing/modifying said event(s) according to an instruction provided by said user(s) an in case of cancel/modification of event and exacting a reimbursement process for transferring said payment back to said customer(s) and cancellation of said invoice(s) without any hassle.

15. The cloud based event management method according to claim 16, wherein set of details include but not limited to location, time, description, pictures, number of seats, prices and ticket layout.

16. The cloud based event management method according to claim 16, wherein user refers to event organizer and customer refers to ticket buyer.

17. The cloud based event management method according to claim 16, wherein said mode includes but not limited to live, online and hybrid.

18. The cloud based event management method according to claim 16, wherein said payment gateways includes but not limited to online gateways like wallets, online gateways, credit, debit cards.

19. The cloud based event management method according to claim 16, wherein said distribution channels include but not limited to social media channels, television channels.
